# EUROPEAN PATENT APPLICATION

(11) **EP 4 686 253 A1**
(43) Date of publication of application: **28.01.2026**
(21) Application number: 23928042.3
(22) Date of filing: 22.03.2023
(51) Int. Cl.: H04W 24/08

(54) **SIGNAL MEASUREMENT METHOD AND APPARATUS**

(71) Applicant: Quectel Wireless Solutions Co., Ltd, Shanghai 201601 (CN)
(72) Inventor: LYU, Ling, Shanghai 201601 (CN); ZHAO, Zheng, Shanghai 201601 (CN); YANG, Zhongzhi, Shanghai 201601 (CN)
(74) Representative: Fish & Richardson P.C.
(86) International application number: PCT/CN2023/083157
(87) International publication number: WO 2024/192729

(57) **Abstract**

The present disclosure provides a method and apparatus for signal measurement. The method includes: a terminal device determining a first time interval or a measurement occasion in the first time interval, and the terminal device measuring a reference signal in the first time interval or the measurement occasion in the first time interval.

## Description

### TECHNICAL FIELD

The present disclosure relates to the field of communication technology, and more specifically to a method and apparatus for signal measurement.

### BACKGROUND

The terminal device is capable of measuring reference signals transmitted by a network device to assist the network device in controlling the terminal device. However, there are currently no clear specifications on how the terminal device should perform these measurements on the reference signals.

### SUMMARY

The present disclosure provides a method and apparatus for signal measurement. The following describes various aspects involved in the present disclosure.

According to a first aspect, a method for signal measurement is provided, including: determining, by a terminal device, one of a first time interval and a measurement occasion in the first time interval; and measuring, by the terminal device, a reference signal in one of the first time interval and the measurement occasion of the first time interval.

According to a second aspect, a method for signal measurement is provided, including: sending, by a network device, first indication information to a terminal device, where the first indication information is used to indicate one of a first time interval and a measurement occasion in the first time interval, and one of the first time interval and the measurement occasion in the first time interval is used to measure a reference signal.

According to a third aspect, a terminal device is provided, including: a determining unit, configured to determine one of a first time interval and a measurement occasion in the first time interval; and a measurement unit, configured to measure a reference signal in one of the first time interval and the measurement occasion of the first time interval.

According to a fourth aspect, a network device is provided, including: a sending unit, configured to send first indication information to a terminal device, where the first indication information is used to indicate one of a first time interval and a measurement occasion in the first time interval, and one of the first time interval and the measurement occasion in the first time interval is used to measure a reference signal.

According to a fifth aspect, a terminal device is provided, including a transceiver, a memory, and a processor, where the memory is configured to store a program, and the processor is configured to invoke the program in the memory and control the transceiver to receive or send a signal to cause the terminal to perform the method according to the first aspect.

According to a sixth aspect, a network device is provided, including a transceiver, a memory, and a processor, where the memory is configured to store a program, and the processor is configured to invoke the program in the memory and control the transceiver to receive or send a signal to cause the network device to perform the method according to the second aspect.

According to a seventh aspect, an apparatus is provided, including a processor, where the processor is configured to invoke a program from a memory to perform the method according to the first aspect.

According to an eighth aspect, an apparatus is provided, including a processor, where the processor is configured to invoke a program from a memory to perform the method according to the second aspect.

According to a ninth aspect, a chip is provided, including a processor, where the processor is configured to invoke a program from a memory to cause a device installed with the chip to perform the method according to the first aspect.

According to a tenth aspect, a chip is provided, including a processor, where the processor is configured to invoke a program from a memory to cause a device installed with the chip to perform the method according to the second aspect.

According to an eleventh aspect, a computer-readable storage medium is provided, where the computer-readable storage medium stores a program, and the program causes a computer to perform the method according to the first aspect.

According to a twelfth aspect, a computer-readable storage medium is provided, where the computer-readable storage medium stores a program, and the program causes a computer to perform the method according to the second aspect.

According to a thirteenth aspect, a computer program product is provided, including a program, where the program causes a computer to perform the method according to the first aspect.

According to a fourteenth aspect, a computer program product is provided, including a program, where the program causes a computer to perform the method according to the second aspect.

According to a fifteenth aspect, a computer program is provided, where the computer program causes a computer to perform the method according to the first aspect.

According to a sixteenth aspect, a computer program is provided, where the computer program causes a computer to perform the method according to the second aspect.

The terminal device in the present disclosure first determines the time interval or the measurement occasion for measuring the reference signal, and then measures the reference signal in the time interval or the measurement occasion, so as to provide a clear solution for the measurement of the reference signal by the terminal device.

### BRIEF DESCRIPTION OF THE DRAWINGS

FIG. 1 shows a wireless communication system applicable to an embodiment of the present disclosure.
FIG. 2 is a schematic diagram of a multi-beam system applicable to an embodiment of the present disclosure.
FIG. 3 is another schematic diagram of a multi-beam system applicable to an embodiment of the present disclosure.
FIG. 4 shows a communication system architecture including NCR.
FIG. 5 is a schematic diagram of a terminal device determining a signal measurement occasion by itself.
FIG. 6 is a schematic flowchart of a method for signal measurement according to an embodiment of the present disclosure.
FIG. 7 is a schematic flowchart of a terminal device performing path loss calculation and measurement reporting when using the configuration information shown in Table 3 alone according to an embodiment of the present disclosure.
FIG. 8 is a schematic flowchart of a terminal device performing path loss calculation and measurement reporting when using both the configuration information shown in Table 3 and first indication information according to an embodiment of the present disclosure.
FIG. 9 is a schematic diagram of determining a CSI reporting occasion according to an embodiment of the present disclosure.
FIG. 10 is a schematic block diagram of a terminal device according to an embodiment of the present disclosure.
FIG. 11 is a schematic block diagram of a network device according to an embodiment of the present disclosure.
FIG. 12 is a schematic structural diagram of a communication device according to an embodiment of the present disclosure.

### DETAILED DESCRIPTION OF THE EMBODIMENTS

The following describes the technical solutions in the present disclosure with reference to the accompanying drawings.

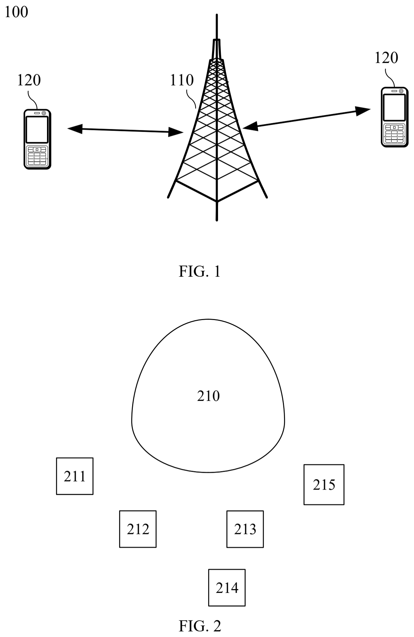

FIG. 1 is a wireless communication system 100 according to an embodiment of the present disclosure. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminals. Optionally, the wireless communication system 100 may include a plurality of network devices, and the coverage of each network device may include other numbers of terminal devices, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal device, and the network device may also be referred to as an access network device or a radio access network device, for example, the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that the communication device involved in the present disclosure may be a network device or a terminal device. For example, the first communication device is a network device, and the second communication device is a terminal device. For another example, the first communication device is a terminal device, and the second communication device is a network device. For another example, both the first communication device and the second communication device are network devices or both are terminal devices.

It should also be understood that all or part of functions of the communication device in the present disclosure may also be implemented by a software function running on hardware or implemented by a virtualization function instantiated on a platform (e.g., a cloud platform).

### POWER HEADROOM (PH)

In wireless communication, a power headroom (PH) is defined as the difference between a UE allowed maximum transmission power and a currently estimated uplink channel transmission power. The uplink channel may be an uplink data channel or an uplink control channel. The uplink data channel may include an uplink data channel of at least one of a primary cell (PCell), a primary secondary cell (PS Cell), a physical uplink control channel (PUCCH) secondary cell (SCell). The uplink data channel may include an uplink shared channel (UL-SCH).

Taking the uplink channel being a physical uplink shared channel (PUSCH) as an example, the power headroom can be simply expressed by the formula: PH = UEallowedMaxTransPower - PuschPower, which represents the remaining transmission power available to the UE beyond the transmission power currently used for PUSCH transmission. Since the calculation of PH depends on the PUSCH transmission power, the power headroom can be computed only during transmission time units of PUSCH. The time unit refers to a time domain resource with a granularity of a time unit when the PUSCH is scheduled, where the time unit may be a subframe, slot, symbol, or the like.

The PH may be used as a reference basis for a network device (e.g., the base station) to allocate an uplink resource (e.g., a radio block (RB) resource). For example, if the PH value being negative indicates that the current PUSCH transmission power has exceeded the maximum transmission power allowed by the terminal device, the uplink resource allocation of the terminal device may be reduced during next scheduling, and if the PH value is positive, the number of subsequently allocated uplink resources may continue to be increased. The uplink resource may be an uplink bandwidth.

The power used for the current uplink channel transmission may be determined based on the path loss measured by the terminal device. If the path loss value is large, the power used for the current uplink channel transmission is relatively large, and if the path loss value is small, the power used for the current uplink channel transmission is relatively small. The terminal device may measure a reference signal sent by the network device, to determine the path loss value.

The terminal device may generate a power headroom report (PHR) based on the calculated PH, and send the PHR to the network device, to implement accurate scheduling of the terminal device by the network device. The PHR may be sent via a media access control control element (MAC CE). The network device may determine an uplink scheduling strategy based on the PHR sent by the terminal device. The uplink scheduling strategy may be an allocation strategy for determining the uplink resource as described above. For example, the network device may determine, based on the PHR, whether to adjust an uplink bandwidth configured for the terminal device.

In some embodiments, the network device may indicate, to the terminal device, a condition for triggering the PHR. For example, the network device may indicate a preset threshold to the terminal device and trigger the PHR when a changing value of the path loss exceeds the preset threshold. If the changing value of the path loss does not exceed the preset threshold and does not meet other conditions for triggering the PHR (e.g., not meeting a condition for periodic PHR), the PHR may not be triggered. When the terminal device obtains the uplink resource (such as an uplink PUSCH resource), the terminal device may send a triggered PHR to the network device.

In some embodiments, the network device may configure PHR-related parameters to the terminal device to control the power headroom report. The PHR-related parameters may include one or more of phr-PeriodicTimer, phr-ProhibitTimer, phr-Tx-PowerFactorChange, phr-Type2OtherCell, phr-ModeOtherCG, multiplePHR, mpe-Reporting-FR2, mpe-ProhibitTimer, (mpe-Threshold), numberOfN, and mpe-ResourcePool.

In some embodiments, a condition for triggering the PHR may include any one of the following conditions 1 to 6, and the conditions 1 to 6 are described below.

Condition 1: the phr-ProhibitTimer expires or is already expired, and path loss change of the terminal device exceeds phr-Tx-PowerFactorChange dB. The path loss change may refer to a difference between a current path loss and a path loss at the time when the PHR was last reported.

Condition 2: the phr-PeriodicTimer has expired.

Condition 3: the terminal device receives a PHR function configured (or reconfigured) by the network device, and the network device has not disabled the PHR function.

Condition 4: the terminal device determines that a secondary cell has been activated in an uplink MAC entity.

Condition 5: the terminal device establishes a connection with a new primary cell.

Condition 6: the phr-ProhibitTimer expires or is already expired, and at least one activated cell in a MAC entity with an uplink resource for transmitting new data corresponding to the terminal device satisfies the following condition, i.e., the cell is configured with an uplink transmission resource or has a PUCCH transmission, and a power backoff change of the cell since the last PHR reception exceeds the phr-Tx-PowerFactorChange dB.

### CELL HANDOVER

In some communication systems, a plurality of cells may cover the same area. When the terminal device is located in the area that is covered by the plurality of cells at the same time, the terminal device may select a cell with a better access signal, so that the terminal device may transmit data over the cell with the better signal, thereby improving the quality of data transmission of the terminal device.

As the terminal device moves, the signal strength received from each cell will continuously change. The terminal device may measure reference signals from a plurality of cells to determine signal measurement results of the plurality of cells. The terminal device determines, based on the signal measurement results and a measurement reporting condition, whether the reporting condition is met. If the reporting condition is met, the terminal device may send a measurement report to the network device.

The measurement report may be used to report a measurement event to the network device. The measurement event may include one or more of: Event A1, Event A2, Event A3, Event A4, Event A5, Event A6, Event B1, and Event B2, as shown in Table 1.

**TABLE 1**

| Event Type | Event Meaning |
|---|---|
| A1 | a signal measurement result of a serving cell is higher than a first threshold |
| A2 | the signal measurement result of the serving cell is lower than a second threshold |
| A3 | a signal measurement result of a neighbor cell is higher than the signal measurement result of the serving cell plus a third threshold |
| A4 | the signal measurement result of the neighbor cell is higher than a fourth threshold |
| A5 | the signal measurement result of the neighbor cell is higher than a fifth threshold, and the signal measurement result of the serving cell is lower than a sixth threshold |
| A6 | the signal measurement result of the neighbor cell is higher than the signal measurement result of the SCell plus a seventh threshold |
| B1 | a signal measurement result of an inter-RAT cell is higher than an eighth threshold |
| B2 | the signal measurement result of the inter-RAT cell is higher than a ninth threshold, and a signal measurement result of the serving cell of the current system is lower than a tenth threshold |

It is seen from Table 1 that Event A1 indicates that the signal measurement result of the serving cell is higher than the first threshold. The first threshold may be an absolute threshold. Event A2 indicates that the signal measurement result of the serving cell is lower than the second threshold. The second threshold may be an absolute threshold. Event A3 indicates that the signal measurement result of the neighbor cell is higher than the signal measurement result of the serving cell plus the third threshold. The third threshold may be a relative threshold. Event A4 indicates that the signal measurement result of the neighbor cell is higher than the fourth threshold. The fourth threshold may be a relative threshold. Event A5 indicates that the signal measurement result of the neighbor cell is higher than the fifth threshold, and the signal measurement result of the serving cell is lower than the sixth threshold. Event A6 indicates that the signal measurement result of the neighbor cell is higher than the signal measurement result of the SCell plus the seventh threshold. The seventh threshold may be a relative threshold. Event A6 may be used in a scenario of carrier aggregation. Event B1 indicates that the signal measurement result of the inter-RAT cell is higher than the eighth threshold. Event B2 indicates that the signal measurement result of the inter-RAT cell is higher than the ninth threshold, and the signal measurement result of the serving cell of the current system is lower than the tenth threshold.

For different scenarios, measurement events reported by the terminal device may be different, as shown in Table 2. For example, for a coverage-based co-frequency measurement scenario, the terminal device may report Event A3 and Event A5. For another example, for a scenario in which the SN cell is released, the terminal device may report Event A3. For another example, for a scenario in which the SN cell is changed, the terminal device may report Event A3. For another example, for a scenario in which CA adds SCell measurement, the terminal device may report Event A4. For another example, for a scenario in which the CA deletes the SCell measurement, the terminal device may report Event A2. For another example, for a coverage-based inter-frequency measurement scenario, the terminal device may report Event A3 and Event A5. For another example, for a scenario in which inter-frequency measurement for handover is turned on, the terminal device may report Event A2. For another example, for a scenario in which inter-frequency measurement for handover is turned off, the terminal device may report Event A1.

**TABLE 2**

| Purpose | Event |
|---|---|
| coverage-based co-frequency measurement | A3, A5 |
| release SN Cell | A2 |
| change SN Cell | A3 |
| CA adds SCell measurement | A4 |
| CA deletes SCell measurement | A2 |
| coverage-based inter-frequency measurement | A3, A5 |
| turn on inter-frequency measurement for handover | A2 |
| turn off inter-frequency measurement for handover | A1 |

### MULTI-BEAM SYSTEM

The design objectives of communication systems (e.g., NR systems) include wideband communication in high frequency bands (e.g., frequency bands above 6 GHz). For example, the 5G system introduces FR2, which includes millimeter-wave frequency bands ranging from 24.25 GHz to 52.6 GHz. As an operating frequency increases, path loss during transmission increases, significantly reducing the transmission distance and thereby impacting the coverage capabilities of high-frequency systems. Therefore, to effectively ensure coverage of high-frequency bands, an effective technical solution is based on massive multiple-in multiple-out (massive MIMO), which processes baseband signals in a special manner to form beams with greater gain, overcoming propagation loss and ensuring the coverage of the communication system.

Currently, common large-scale antenna arrays are millimeter-wave antenna arrays. Due to the shorter wavelength emitted by millimeter-wave antenna arrays, the spacing between antenna elements in the array can be shorter, and the aperture of the antenna elements can be smaller, allowing for more physical antenna elements to be integrated into a finite-sized two-dimensional antenna array.

Additionally, due to the limited size of the millimeter-wave antenna array, considering factors such as hardware complexity, cost overhead, and power consumption, digital beamforming cannot be adopted, but analog beamforming is typically used, which enhances network coverage while also reducing implementation complexity of the device.

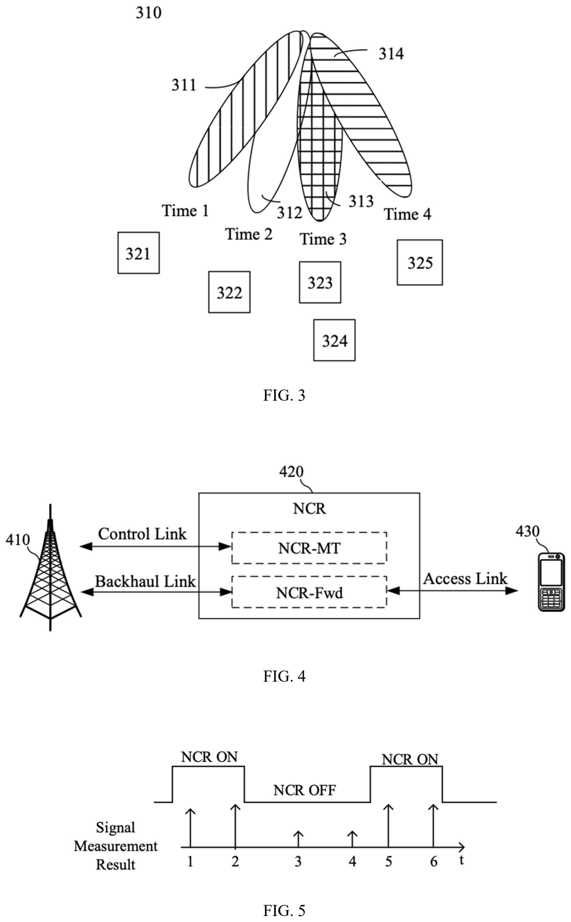

For ease of understanding the multi-beam system, a scenario in which the network device communicates with the terminal is used as an example in the following with reference to FIG. 2 and FIG. 3, to introduce a beam-based communication process.

Referring to FIG. 2, in a conventional communication system (e.g., an LTE communication system), a wider beam 210 is typically used to cover the entire cell (or referred to as a "sector"). In this way, the terminal (such as terminals 211 to 215) in the cell at each time may communicate with the network device via the wider beam, such as obtaining a transmission resource allocated by the network device.

Referring to FIG. 3, in a new communication system (e.g., NR), a multi-beam system 310 may be used to cover the entire cell, that is, each beam (such as beams 311 to 314) in the multi-beam system respectively covers a small range in the cell, and the effect of covering the entire cell by multiple beams is implemented via beam sweeping.

During beam sweeping, different beams are used at different times to cover different regions in a cell. The base station directs the beam towards the terminal device to which it is transmitting data, forming a long and narrow beam, thereby increasing the coverage area of the cell. For example, at time 1, the communication system may use beam 311 to cover a region where terminal 321 is located. At time 2, the communication system may use beam 312 to cover a region where terminal 322 is located. At time 3, the communication system may use beam 313 to cover regions where terminals 323 and 324 are located. At time 4, the communication system may use beam 314 to cover a region where terminal 325 is located.

For the multi-beam system, due to the use of narrower beams, transmit energy may be more concentrated and thus may cover a further distance. However, because the beam is narrower, each beam can only cover some regions in the cell, and therefore, the multi-beam system may be understood as 'trading time for space'.

Typically, a beam used by a transmitter to send a signal is referred to as a 'transmit beam.' A beam used by a receiver to receive the signal is referred to as a 'receive beam.'

In some cases, the transmit beam may also be referred to as a spatial domain transmission filter or a transmit spatial filter, and correspondingly, the receive beam may also be referred to as a spatial domain reception filter or a receive spatial filter. In some other cases, the transmit beam may also be referred to as a spatial domain transmission parameter, and correspondingly, the receive beam may also be referred to as a spatial domain reception parameter. For ease of understanding, the embodiments of the present disclosure are mainly described by taking a beam as an example.

As is seen from the above, the coverage area of the communication system can be increased through the beamforming technology. To further increase the coverage area of the communication system, a relay device is introduced into some communication systems, and the signal between the terminal device and the base station is forwarded through the relay device, so that the coverage area of the system is improved. The relay device may be an amplifier, and the amplifier may amplify a signal sent by the base station, and then forward the amplified signal to the terminal device, to improve the coverage area of the system. A conventional amplifier is not controlled by the network, that is, the amplifier amplifies and forwards all received signals, which may increase additional interference and bring difficulties to network optimization. Therefore, the operator only deploys amplifiers in certain special scenarios, such as tunnel portal, building corners, and the like.

To overcome the foregoing problems, some communication systems introduce a network-controlled relay device, and the relay device may be a network-controlled repeater (NCR). The relay device may be deployed at the edge of the cell to achieve the purpose of increasing coverage. The following uses NCR as an example to introduce a communication process in the embodiments of the present disclosure.

After the NCR is introduced, the network device may control the NCR to forward the wireless signal only when needed and may not forward the wireless signal when not needed, so that the interference is well controlled, and the application of the NCR in the communication system is greatly promoted.

FIG. 4 illustrates a communication system architecture including NCR 420. The NCR 420 is located between a network device 410 and a terminal device 430, and there are two connections between the NCR 420 and the network device 410, which are respectively a control link and a backhaul link. The control link is configured to transmit control information, and the backhaul link is configured to transmit user data. There is a connection between the NCR 420 and the terminal device 430, which is an access link, and the access link is configured to transmit user data. The NCR 420 may include an NCR forwarding (NCR-Fwd) unit and an NCR mobile termination (NCR-MT) unit. The forwarding unit communicates with the network device 420 through the backhaul link, the forwarding unit communicates with the terminal device 430 through the access link, and the forwarding unit is configured to amplify and forward uplink and downlink signals between the terminal device 430 and the network device 410.

In the communications system architecture shown in FIG. 4, the network device (e.g., a base station) may control NCR via the control link. For example, the network device may control which data the NCR amplifies and forwards, and how it forwards the data, etc. For downlink transmission, the NCR may receive a data signal sent by the network device, amplify the data signal, and then forward the amplified data signal to the terminal device. For uplink transmission, the NCR may receive a data signal sent by the terminal device, amplify the data signal, and then forward the amplified data signal to the network device. In addition to the data signal, the NCR may further forward a part or all of reference signals for the terminal device to perform signal measurement. For example, the terminal device may measure the reference signal to determine channel quality, so as to determine uplink transmission power. For another example, the terminal device may measure the reference signal to determine a signal measurement result and report the signal measurement result to the network device. The network device may determine, based on the signal measurement result, whether to perform cell handover.

Considering power saving and interference issues, the NCR may introduce an on/off mechanism, that is, the NCR has two working states, namely an on state (or an active state) and an off state (or an inactive state). An ON period of the NCR may also be referred to as a working period or an active period of the NCR, and an OFF period of the NCR may also be referred to as a non-working period or an inactive period of the NCR. During the ON period, the NCR may forward the signal, as previously described. During the inactive period, the NCR does not forward any signal. It should be noted that, in the inactive period, the NCR does not forward the signal between the base station and the terminal device, but the transmission of the control link between the NCR and the base station is not affected, for example, the NCR may still receive control information sent by the base station through the control link.

In some implementations, the active period and/or the inactive period of the NCR may be periodic, similar to an ON/OFF mechanism of discontinuous reception (DRX). That is, the NCR may be periodically turned on and/or off. In some other implementations, the active period and/or the inactive period of the NCR may also be temporarily configured by the network device. The network device may configure a one-time active period and/or inactive period for the NCR. Generally, the NCR state temporarily configured by the network device is disposable, and when the terminal device performs smooth calculation on the measurement result, the impact of the one-time NCR state on the calculation result is relatively small.

The reference signal in the embodiments of the present disclosure may be used for channel measurement or channel estimation. For example, the reference signal may include a channel state information reference signal (CSI-RS) and a synchronization signal block (SSB). It should be noted that the SSB may also be referred to as a synchronization signal/physical broadcast channel block (SS/PBCH block).

Currently, the terminal device measuring the reference signal mainly has the following two functions.
1. Computing path loss. After the path loss value is calculated, the terminal device may determine, based on the change of the path loss value, whether to trigger the PHR.
2. Determining the signal measurement result. The terminal device may determine, based on the signal measurement result in combination with a measurement reporting condition configured by the base station, whether the reporting condition is met. If the reporting condition is met, the terminal device may send the signal measurement result to the base station.

The signal measurement result may include one or more of reference signal receiving power (RSRP), reference signal received quality (RSRQ), signal to interference plus noise ratio (SINR).

To avoid the influence of severe channel change on the measurement result caused by fast failure of the wireless channel, the terminal device may perform multiple measurements on the reference signal (i.e., the downlink reference signal), and perform smooth calculation. The occasion at which the terminal device measures the reference signal may be chosen by the terminal device itself. Currently, the protocol only specifies the number of measurements that the terminal device performs within a certain period to ensure accuracy of the measurement result, without specifying exact times at which the terminal device performs the measurements.

After the ON/OFF mechanism of NCR is introduced, the NCR forwards the reference signal sent by the network device during the ON period and does not forward the reference signal sent by the network device during the OFF period. In other words, during the OFF period, the terminal device receives a reference signal directly sent by the network device. For the terminal device, in the ON phase of the NCR, the terminal device receives the reference signal forwarded by the NCR, so the measurement result of the signal is relatively good. In contrast, in the OFF phase of the NCR, the terminal device cannot receive the reference signal forwarded by the NCR and can only measure the reference signal directly transmitted by the network device, so the measurement result of the signal is relatively poor.

If the terminal device selects the occasion to perform measurement according to the current measurement mechanism, the measurement result is inaccurate, which affects the triggering of the PHR and the reporting of the measurement result. Taking FIG. 5 as an example, 6 arrows in FIG. 5 represent 6 occasions for measuring the reference signal, where measurement occasions 1, 2, 5, and 6 occur during the ON period of the NCR, and measurement occasions 3 and 4 occur during the OFF period of the NCR. If the terminal device selects the occasions 1, 2, 5, and 6 for measurement, the measured reference signal is forwarded via NCR, resulting in a better signal measurement result and a stronger signal. If the terminal device selects the occasions 3 and 4 for measurement, the measured reference signal is directly sent by the network device, resulting in a poor signal measurement result and a weaker signal.

It is learned from the foregoing that the measurement occasion selected by the terminal device may affect the final measurement result, thereby affecting the triggering of the PHR and the triggering of reporting the measurement result. The reporting of the PHR may affect the scheduling strategy of the network device, and the reporting of the measurement result may affect the control of handover behavior of the network device on the terminal device. Therefore, when air interface quality is unchanged, the terminal device selects different measurement occasions, which may cause the network device to perceive that the terminal device is in different channel environments, thereby affecting the decision of the network device.

Based on this, embodiments of the present disclosure provide a method and apparatus for signal measurement, the terminal device may first determine a first time interval or a measurement occasion in the first time interval for measuring a reference signal, and then measure the reference signal in the first time interval or the measurement occasion in the first time interval, so as to provide a clear solution for measuring the reference signal by the terminal device. In some implementations, the accuracy of the measurement result may be improved by measuring the reference signal in the first time interval or the measurement occasion in the first time interval. The terminal device may provide correct measurement information to the network device, to assist the network device in achieving efficient scheduling and mobility management.

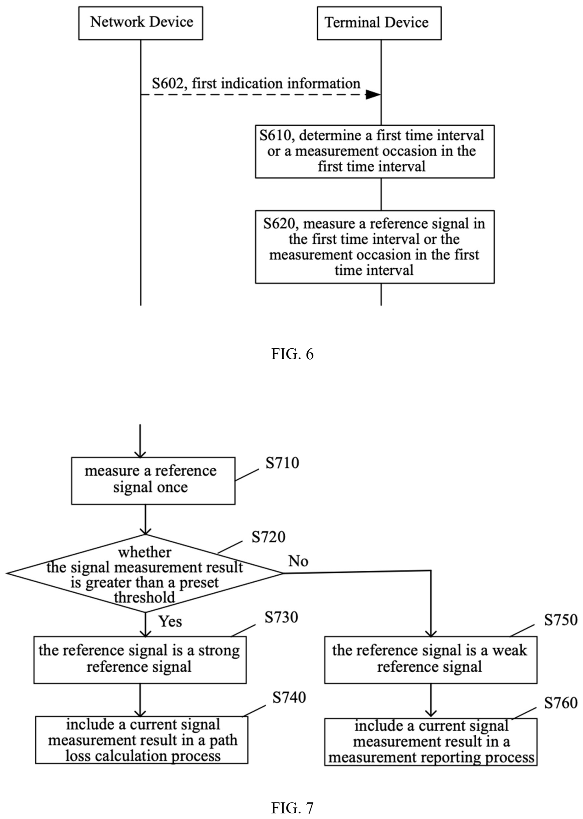

The following describes a method for signal measurement provided in an embodiment of the present disclosure with reference to FIG. 6.

Referring to FIG. 6, at operation S610, the terminal device determines a first time interval or a measurement occasion in the first time interval.

In some embodiments, the signal measurement result of the first time interval may be different from signal measurement results in other time intervals. For example, the signal measurement result in the first time interval is greater than or equal to a preset threshold, or the signal measurement result in the first time interval is less than or equal to the preset threshold. The signal measurement result may include one or more of RSRP, RSRQ, and SINR.

In some embodiments, the first time interval may be related to a first relay device. As an example, the first time interval may be in an active period of the first relay device. For example, the first time interval may be the active period of the first relay device, or the first time interval may be a partial time interval of the active period of the first relay device. As another example, the first time interval may be in an inactive period of the first relay device. For example, the first time interval may be the inactive period of the first relay device, or the first time interval may be a partial time interval of the inactive period of the first relay device.

In some embodiments, the active period of the first relay device may also be referred to as an ON period or a working period of the first relay device, and the inactive period of the first relay device may also be referred to as an OFF period or a non-working period of the first relay device.

In some embodiments, the first relay device may be a network-controlled relay device, for example, the network device may control the on state and the off state of the first relay device.

In some embodiments, the first time interval may be one time interval, or may be a plurality of time intervals, which is not specifically limited in the embodiments of the present disclosure. For example, the first time interval may be one or more time intervals within the active period of the first relay device. For another example, the first time interval may be one or more time intervals within the inactive period of the first relay device.

The measurement occasion in the first time interval may be one or more measurement occasions in the first time interval.

At operation S620, the terminal device measures a reference signal in the first time interval or the measurement occasion in the first time interval.

In some embodiments, the terminal device may maintain a signal measurement result after measuring the reference signal.

In some embodiments, the first terminal device may be in a coverage area of the first relay device.

In some embodiments, the first relay device may be referred to as NCR. The first relay device may perform physical layer forwarding of a signal between the network device and the terminal device. In some embodiments, the terminal device cannot perceive the existence of the first relay device, that is, the terminal device cannot perceive whether it is in the coverage area of the first relay device. The terminal device may only need to perform corresponding measurement according to the configuration of the network device.

In some embodiments, the first time interval or the measurement occasion in the first time interval may be determined based on first indication information. The first indication information may be provided by the network device or predefined in a protocol.

In some implementations, referring to FIG. 6, at operation S602, the network device sends the first indication information to the terminal device, where the first indication information is used to indicate a state of the first relay device.

There are a plurality of manners for the network device to send the first indication information, which is not specifically limited in the embodiments of the present disclosure. For example, the network device may send the first indication information via radio resource control (RRC) signaling. For another example, the network device may send the first indication information via the MAC CE.

In some embodiments, the first indication information may indicate the first time interval or the measurement occasion in the first time interval by indicating the state of the first relay device.

The state of the first relay device may include an ON period and/or an OFF period, or the state of the first relay device may include an active period and/or an inactive period, or the state of the first relay device may include a DRX active period and/or a DRX inactive period, or the state of the first relay device may include a working period and/or a non-working period.

The following describes the solutions of the embodiments of the present disclosure by taking the active period and the inactive period as an example. The active period and/or the inactive period of the first relay device may be configured by the network device to the first relay device. The active period and/or the inactive period of the first relay device may be periodic or may be a one-time period temporarily configured by the network device.

There are a plurality of ways for the network device to indicate the state of the first relay device to the terminal device. For example, the network device may indicate the active period of the first relay device to the terminal device. For another example, the network device may indicate the inactive period of the first relay device to the terminal device. For another example, the network device may indicate the active period and the inactive period of the first relay device to the terminal device. The active period may refer to a cycle of the active period and/or a duration of the active period. The inactive period may refer to a cycle of the inactive period and/or a duration of the inactive period.

In some embodiments, the terminal device may be in a coverage area of the first relay device. For example, the network device may first determine which relay device's coverage area the terminal device is in, and then indicate state information of the relay device to the terminal device. Before sending the first indication information to the terminal device, the network device may first determine the state information of the first relay device, and then indicate the state of the first relay device to the terminal device.

In some embodiments, if the network device determines that the terminal device is in the coverage area of the first relay device, and the network device configures the DRX active period and/or the DRX inactive period for the first relay device, the network device may indicate the DRX active period and/or the DRX inactive period information to the terminal device.

There are a plurality of ways for the network device to determine whether the terminal device is in the coverage area of the first relay device, which is not specifically limited in the embodiments of the present disclosure. In some embodiments, whether the terminal device is within the coverage area of the first relay device may be determined based on first information. The first information is related to one or more of: a location of the terminal device, a location of the first relay device, and a signal measurement result of the terminal device for the reference signal. The location of the terminal device and/or the location of the first relay device may refer to a geographic location.

In some embodiments, the network device may determine, based on the location of the terminal device, whether the terminal device is within the coverage area of the first relay device. For example, the network device may know the coverage area of each relay device, and then determine, based on the location of the terminal device, whether the terminal device is within the coverage area of the first relay device.

In some embodiments, the network device may determine, based on the location of the first relay device, whether the terminal device is within the coverage area of the first relay device. For example, the network device may determine the coverage area of the first relay device based on the location of the first relay device, to determine whether the terminal device is within the coverage area of the first relay device.

In some embodiments, the network device may determine, based on the location of the terminal device and the location of the first relay device, whether the terminal device is within the coverage area of the first relay device. For example, the network device may determine a distance between the terminal device and the first relay device based on the location of the terminal device and the location of the first relay device. If the distance between the terminal device and the first relay device is less than or equal to a first preset threshold value, it indicates that the terminal device is within the coverage area of the first relay device. Taking the first preset threshold being 100 meters as an example, if the distance between the terminal device and the first relay device is less than or equal to 100 meters, it indicates that the terminal device is within the coverage area of the first relay device; and if the distance between the terminal device and the first relay device is greater than 100 meters, it indicates that the terminal device is outside the coverage area of the first relay device.

The first preset threshold value may be specifically set according to an actual situation. For example, the first preset threshold value may be related to the coverage area of the first relay device. If the coverage area of the first relay device is large, the first preset threshold value may be set to be large. If the coverage area of the first relay device is small, the first preset threshold value may be set to be small.

In some embodiments, the network device may determine, based on the signal measurement result of the terminal device for the reference signal, whether the terminal device is within the coverage area of the first relay device. After measuring the reference signal, the terminal device may send the signal measurement result to the network device. The network device may determine, based on the signal measurement result, whether the terminal device is within the coverage area of the first relay device. The signal measurement result may include one or more of: RSRP, RSRQ, and SINR.

For example, if a changing value of the signal measurement result is greater than or equal to a second preset threshold value, it indicates that the terminal device is within the coverage area of the first relay device. If the terminal device enters the coverage area of the first relay device from a non-coverage area of the first relay device, the signal measurement result of the terminal device changes, and therefore, the network device may determine, based on the changing value of the signal measurement result, whether the terminal device is within the coverage area of the first relay device.

The second preset threshold value may be specifically set according to an actual situation. For example, the second preset threshold value may be determined based on the location of the first relay device and/or amplification capability of the first relay device on the signal.

In some embodiments, the terminal device may send each signal measurement result to the network device. In some other embodiments, the terminal device may send the signal measurement result to the network device only when the signal measurement result changes greatly. For example, the terminal device may send the signal measurement result to the network device only when the changing value of the signal measurement result is greater than or equal to the second preset threshold value.

In some embodiments, the changing value of the signal measurement result being greater than or equal to the second preset threshold value indicates that the changing value of the signal measurement result within a preset period of time is greater than or equal to the second preset threshold value. The preset period of time may be specifically set according to an actual situation. Taking the second preset threshold value being 10 dB as an example, if the terminal device finds that the changing value of SSB in 200 ms is greater than 10 dB, the terminal device may send the signal measurement result to the network device. For example, the terminal device may indicate, to the network device, that 'the changing value of the SSB measured at a certain occasion suddenly becomes larger and the change amplitude exceeds 10 dB'.

In some embodiments, the changing value of the signal measurement result being greater than or equal to the second preset threshold value indicates that the changing value of the signal measurement result within a preset period of time is greater than or equal to the second preset threshold value and the duration exceeds a preset threshold. The preset threshold may be specifically set according to an actual situation. For example, if the terminal device finds that the changing value of the SSB in 200 ms is greater than 10 dB and the duration exceeds the preset threshold, the terminal device may send the signal measurement result to the network device. For example, the terminal device may indicate, to the network device, that 'the changing value of the SSB measured at a certain occasion suddenly becomes larger, the change amplitude exceeds 10 dB, and the duration exceeds the preset threshold'.

In some embodiments, the network device may determine, based on an occasion at which the terminal device reports the signal measurement result, a beam in which the terminal device is located, and determine, in combination with the relay device deployed in the direction of the beam, whether the terminal device is within the coverage area of the relay device.

A type of the reference signal is not specifically limited in the embodiments of the present disclosure. For example, the reference signal may be an SSB, or may be a CSI-RS. Certainly, the reference signal may alternatively be another reference signal, such as a positioning reference signal (PRS), etc. Which specific type of reference signal is measured by the terminal device may be specified by a protocol, indicated by the network device, or selected by the terminal device itself.

If the type of the reference signal is indicated by the network device, the network device may indicate to the terminal device via broadcast or may indicate to the terminal device via a dedicated message. For example, the network device may indicate the type of the reference signal to the terminal device via a system information block (SIB). For another example, the network device may indicate the type of the reference signal to the terminal device via an RRC message dedicated to the UE.

If the type of the reference signal is determined by the terminal device itself, the terminal device may determine the type of the reference signal based on the signal measurement result of the reference signal. Taking the signal measurement result being RSRP as an example, if RSRP of a reference signal of type A is greater than a preset threshold, the terminal device may select the reference signal of type A, otherwise, the terminal device may select a reference signal of type B. The preset threshold may be specifically determined according to an actual situation, for example, the preset threshold may be 30 dB.

For a terminal device in an idle state (RRC idle state) or an inactive state (RRC inactive state), the terminal device needs to perform cell selection and/or cell reselection based on the signal measurement result. If the terminal device is within the coverage area of the first relay device and the first relay device is configured with the active period and/or the inactive period, it is currently not explicitly defined whether the terminal device should perform cell selection or cell reselection based on a signal forwarded by the first relay device or a signal not forwarded by the first relay device. Based on this, the embodiments of the present disclosure propose that the terminal device performs cell selection and/or cell reselection based on the first reference signal.

In some embodiments, the first reference signal may include one or more of: a reference signal in the first time interval, a reference signal in the measurement occasion in the first time interval, a reference signal outside the first time interval, and a reference signal outside the measurement occasion in the first time interval. For example, the first reference signal may include the reference signal in the first time interval or the reference signal in the measurement occasion in the first time interval. For another example, the first reference signal may include the reference signal outside the first time interval or the reference signal outside the measurement occasion in the first time interval. For another example, the first reference signal may include the reference signal in the first time interval and the reference signal outside the first time interval. For another example, the first reference signal may include the reference signal in the measurement occasion in the first time interval and the reference signal outside the measurement occasion in the first time interval.

If the first time interval is the active period of the first relay device, the reference signal in the first time interval or the reference signal in the measurement occasion in the first time interval may be referred to as a strong reference signal, and the reference signal outside the first time interval or the reference signal outside the measurement occasion in the first time interval may be referred to as a weak reference signal. If the first time interval is the inactive period of the first relay device, the reference signal in the first time interval or the reference signal in the measurement occasion in the first time interval may be referred to as a weak reference signal, and the reference signal outside the first time interval or the reference signal outside the measurement occasion in the first time interval may be referred to as a strong reference signal.

In some embodiments, the first reference signal may include a reference signal forwarded by the first relay device, and/or a reference signal that is not forwarded by the first relay device. The reference signal forwarded by the first relay device may also be referred to as the strong reference signal, and the reference signal that is not forwarded by the first relay device may also be referred to as the weak reference signal. The reference signal that is not forwarded by the first relay device may refer to a reference signal that is directly sent by the network device to the terminal device.

For ease of description, the solutions of the embodiments of the present disclosure are described below by taking the strong reference signal and the weak reference signal as examples.

In some embodiments, the terminal device may perform cell selection and/or cell reselection based on one type of reference signals, or the terminal device may alternatively perform cell selection and cell reselection based on two types of reference signals. For example, the terminal device may perform cell selection and/or cell reselection based on the strong reference signal. For another example, the terminal device may perform cell selection and/or cell reselection based on the weak reference signal. For another example, the terminal device may perform cell selection and/or cell reselection based on both the strong reference signal and the weak reference signal.

The first reference signal may be predefined in a protocol, or the first reference signal may be indicated by the network device. For example, the network device may send third indication information to the terminal device, where the third indication information is used to indicate a first reference signal. If the first reference signal is indicated by the network device, the network device indicates the first reference signal via a broadcast message or a message dedicated to the UE. For example, the broadcast message may be an SIB, or may be another message, such as downlink control information (DCI) that can be received by all the terminal devices.

The cell selection and cell reselection may be based on the same or different reference signals. For example, the terminal device may perform cell selection based on the strong reference signal and perform cell reselection based on the weak reference signal. For another example, the terminal device may perform cell selection based on the weak reference signal and perform cell reselection based on the strong reference signal. For another example, the terminal device may perform cell selection and cell reselection based on the strong reference signal. For another example, the terminal device may perform cell selection and cell reselection based on the weak reference signal.

If the terminal device is in a connected state (i.e., an RRC connected state), the terminal device may perform path loss calculation and/or measurement reporting based on a reference signal from the network device. If the terminal device is within the coverage area of the first relay device and the first relay device is configured with the active period and/or the inactive period, it is currently not explicitly defined whether the terminal device should perform path loss calculation and/or measurement reporting based on a signal forwarded by the first relay device or based on a signal not forwarded by the first relay device. Based on this, the embodiments of the present disclosure propose that the terminal device performs the path loss calculation based on a second reference signal.

In some embodiments, the second reference signal may include one or more of: a reference signal in the first time interval, a reference signal in the measurement occasion in the first time interval, a reference signal outside the first time interval, and a reference signal outside the measurement occasion in the first time interval. For example, the second reference signal may include the reference signal in the first time interval or the reference signal in the measurement occasion in the first time interval. For another example, the second reference signal may include the reference signal outside the first time interval or the reference signal outside the measurement occasion in the first time interval. For another example, the second reference signal may include the reference signal in the first time interval and the reference signal outside the first time interval. For another example, the second reference signal may include the reference signal in the measurement occasion in the first time interval and the reference signal outside the measurement occasion in the first time interval.

If the first time interval is the active period of the first relay device, the reference signal in the first time interval or the reference signal in the measurement occasion in the first time interval may be referred to as a strong reference signal, and the reference signal outside the first time interval or the reference signal outside the measurement occasion in the first time interval may be referred to as a weak reference signal. If the first time interval is the inactive period of the first relay device, the reference signal in the first time interval or the reference signal in the measurement occasion in the first time interval may be referred to as a weak reference signal, and the reference signal outside the first time interval or the reference signal outside the measurement occasion in the first time interval may be referred to as a strong reference signal.

In some embodiments, the second reference signal may include a reference signal forwarded by the first relay device and/or a reference signal that is not forwarded by the first relay device. The reference signal forwarded by the first relay device may also be referred to as the strong reference signal, and the reference signal that is not forwarded by the first relay device may also be referred to as the weak reference signal. The reference signal that is not forwarded by the first relay device may refer to a reference signal that is directly sent by the network device to the terminal device.

The second reference signal may be predefined in a protocol, or the second reference signal may be indicated by the network device. For example, the network device may send fourth indication information to the terminal device, where the fourth indication information is used to indicate the second reference signal. If the second reference signal is indicated by the network device, the network device may indicate the second reference signal via a broadcast message or a message dedicated to the UE. For example, the broadcast message may be a SIB or other messages, such as DCI that can be received by all the terminal devices. Because the terminal device is in the connected state, the configuration flexibility is improved by indicating the second reference signal by the network device.

For ease of description, the solutions of the embodiments of the present disclosure are described below by taking the strong reference signal and the weak reference signal as examples.

If the second reference signal is indicated by the network device, the network device may instruct the terminal device to perform path loss calculation and/or measurement reporting only based on the strong reference signal, or the network device may instruct the terminal device to perform path loss calculation and/or measurement reporting only based on the weak reference signal, or the network device may instruct the terminal device to separately perform path loss calculation and/or measurement reporting based on the strong reference signal and the weak reference signal.

The path loss calculation and measurement reporting may be based on the same or different reference signals. For example, the terminal device may perform path loss calculation based on the strong reference signal and perform measurement reporting based on the weak reference signal. For another example, the terminal device may perform path loss calculation based on the weak reference signal and perform measurement reporting based on the strong reference signal. For another example, the terminal device may perform path loss calculation and measurement reporting based on the strong reference signal. For another example, the terminal device may perform path loss calculation and measurement reporting based on the weak reference signal.

Table 3 shows cases of the reference signal used by the terminal device for path loss calculation and measurement reporting. The configuration information shown in Table 3 may be configured by the network device to the terminal device. The solution shown in Table 3 may include the following four cases.

Case 1: the terminal device may perform path loss calculation based on the strong reference signal and perform measurement reporting based on the strong reference signal.

Case 2: the terminal device may perform path loss calculation based on the strong reference signal and perform measurement reporting based on the weak reference signal.

Case 3: the terminal device may perform path loss calculation based on the weak reference signal and perform measurement reporting based on the strong reference signal.

Case 4: the terminal device may perform path loss calculation based on the weak reference signal and perform measurement reporting based on the weak reference signal.

**TABLE 3**

| Case | Which type of reference signal is used as the basis for calculating the path loss | Which type of reference signal is used as the basis for calculating the signal measurement result of the measurement reporting |
|---|---|---|
| 1 | strong reference signal | strong reference signal |
| 2 | strong reference signal | weak reference signal |
| 3 | weak reference signal | strong reference signal |
| 4 | weak reference signal | weak reference signal |

The configuration information shown in Table 3 may be used in combination with the first indication information described above or may be used independently. In other words, the terminal device may determine, based on the first indication information, whether the received reference signal is the strong reference signal or the weak reference signal, or the terminal device may determine whether the received reference signal is the strong reference signal or the weak reference signal not based on the first indication information. For example, the terminal device may determine, based on the signal measurement result of the received reference signal, whether the reference signal is the strong reference signal or the weak reference signal.

As an example, if the configuration information shown in Table 3 is used independently, the terminal device may determine whether a currently-measured reference signal belongs to the strong reference signal or the weak reference signal after each measurement is completed based on the signal measurement result, such as by determining whether the signal measurement result is greater than or equal to a preset threshold, and then perform a corresponding calculation process based on the type of the reference signal. For example, if the signal measurement result of the reference signal is greater than the preset threshold, it indicates that the reference signal is a strong reference signal; and if the signal measurement result of the reference signal is less than or equal to the preset threshold, it indicates that the reference signal is a weak reference signal.

As another example, if the configuration information shown in Table 3 is used in combination with the first indication information, the terminal device may determine whether a transmission occasion of the reference signal belongs to the active period or the inactive period of the first relay device according to time domain information (e.g., a slot or a subframe) of the measured reference signal after each measurement is completed, so as to determine whether the reference signal is the strong reference signal or the weak reference signal. Then, the terminal device performs a corresponding calculation process based on the type of the reference signal.

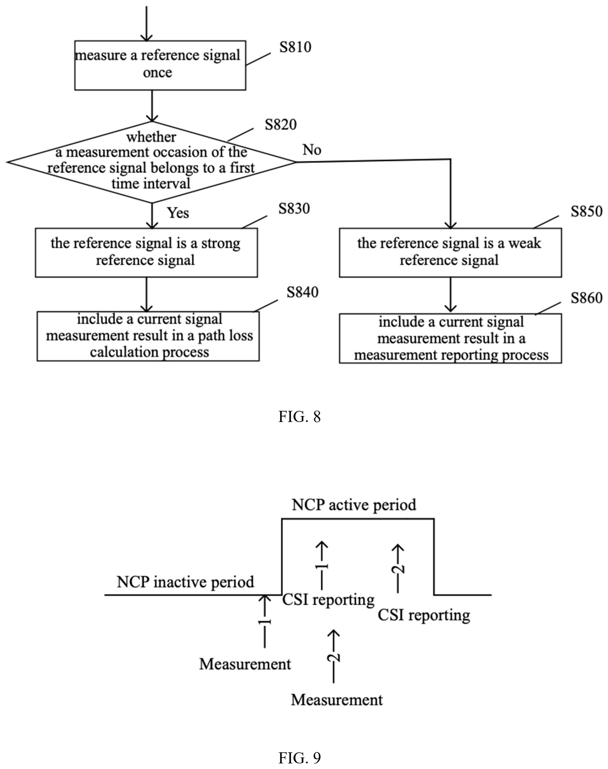

The following describes a process of performing path loss calculation and measurement reporting by the terminal device with reference to FIG. 7 and FIG. 8. FIG. 7 and FIG. 8 are exemplified by taking Case 2 in Table 3 as an example, and solutions of other cases are similar to that of Case 2, which are not elaborated upon here for the sake of brevity.

It should be noted that there are a plurality of ways for the terminal device to determine the strong reference signal and the weak reference signal, and FIG. 7 and FIG. 8 are merely two possible implementations. The embodiments of the present disclosure are not limited thereto.

FIG. 7 shows a process of performing path loss calculation and measurement reporting by the terminal device when the configuration information shown in Table 3 is used independently.

As shown in FIG. 7, at operation S710, the terminal device measures the reference signal to obtain a signal measurement result.

At operation S720, the terminal device determines whether the signal measurement result is greater than a preset threshold.

At operation S730, if the signal measurement result is greater than the preset threshold, it is determined that the reference signal is a strong reference signal.

At operation S740, if the reference signal is the strong reference signal, the terminal device may include a current signal measurement result in a path loss calculation process. For example, the terminal device may include the current signal measurement result in a path loss smooth calculation process.

At operation S750, if the signal measurement result is less than or equal to the preset threshold, it is determined that the reference signal is a weak reference signal.

At operation S760, if the reference signal is the weak reference signal, the terminal device may include a current signal measurement result in a calculation process of measurement reporting. For example, the terminal device may include the current signal measurement result in a smooth calculation process of measurement reporting.

FIG. 8 shows a process of performing path loss calculation and measurement reporting by the terminal device when the configuration information shown in Table 3 is used in combination with the first indication information.

As shown in FIG. 8, at operation S810, the terminal device measures the reference signal to obtain a signal measurement result.

At operation S820, the terminal device determines whether a measurement occasion of the reference signal belongs to a first time interval. The first time interval may refer to the active period of the first relay device.

At operation S830, if the measurement occasion of the reference signal belongs to the first time interval, the terminal device may determine that the reference signal is a strong reference signal.

At operation S840, if the reference signal is the strong reference signal, the terminal device may include a current signal measurement result in a path loss calculation process. For example, the terminal device may include the current signal measurement result into a path loss smooth calculation process.

At operation S850, if the measurement occasion of the reference signal does not belong to the first time interval, the terminal device may determine that the reference signal is a weak reference signal.

At operation S860, if the reference signal is the weak reference signal, the terminal device may include the current signal measurement result in a calculation process of measurement reporting. For example, the terminal device may include the current signal measurement result in a smooth calculation process of measurement reporting.

In some embodiments, the terminal device may maintain a set of path loss, or may maintain two sets of path loss. A specific number of sets of path loss maintained by the terminal device may be configured or indicated by the network device to the terminal device. If the terminal device maintains two sets of path loss, the terminal device may perform path loss calculation based on the strong reference signal and the weak reference signal respectively. If the terminal device maintains a set of path loss, the terminal device may have three implementations. Implementation 1: the terminal device performs path loss calculation based on the strong reference signal. Implementation 2: the terminal device performs path loss calculation based on the weak reference signal. Implementation 3: the terminal device selects one of the strong reference signal and the weak reference signal and performs path loss calculation based on the selected reference signal.

A specific set of path loss maintained by the terminal device may be indicated by the network device to the terminal device. For example, the network device may instruct the terminal device to perform path loss calculation based on the strong reference signal. For another example, the network device may instruct the terminal device to perform path loss calculation based on the weak reference signal. For another example, the network device may instruct the terminal device to select one reference signal to perform path loss calculation.

A specific set of path loss maintained by the terminal device may be indicated by the network device to the terminal device. For example, the network device may instruct the terminal device to perform path loss calculation based on the strong reference signal. For another example, the network device may instruct the terminal device to perform path loss calculation based on the weak reference signal. For another example, the network device may instruct the terminal device to select one reference signal to perform path loss calculation.

The terminal device maintaining two sets of path loss may indicate that the second reference signals in the foregoing include a reference signal forwarded by the first relay device and a reference signal that is not forwarded by the first relay device. The terminal device maintains a set of path loss, which may indicate that the second reference signal in the foregoing is a reference signal forwarded by the first relay device or a reference signal that is not forwarded by the first relay device.

In some embodiments, the terminal device may maintain a set of signal measurement results or may maintain two sets of signal measurement results. A specific number of sets of signal measurement results maintained by the terminal device may be configured or indicated by the network device to the terminal device. If the terminal device maintains two sets of signal measurement results, the terminal device may determine the signal measurement result based on the strong reference signal and the weak reference signal, respectively. If the terminal device maintains a set of signal measurement results, the terminal device may have three implementations. Implementation 1: the terminal device determines a signal measurement result based on the strong reference signal. Implementation 2: the terminal device determines a signal measurement result based on the weak reference signal. Implementation 3: the terminal device selects one of the strong reference signal and the weak reference signal and determines a signal measurement result based on the selected reference signal.

A specific set of signal measurement results maintained by the terminal device may be indicated by the network device to the terminal device. For example, the network device may instruct the terminal device to determine a signal measurement result based on the strong reference signal. For another example, the network device may instruct the terminal device to determine a signal measurement result based on the weak reference signal. For another example, the network device may instruct the terminal device to select one reference signal to determine a signal measurement result.

The terminal device maintaining two sets of signal measurement results may indicate that the second reference signals in the foregoing include a reference signal forwarded by the first relay device and a reference signal that is not forwarded by the first relay device. The terminal device maintaining a set of signal measurement results may indicate that the second reference signal in the foregoing is a reference signal forwarded by the first relay device or a reference signal that is not forwarded by the first relay device.

Table 4 shows the calculation basis of two sets of path loss and two sets of signal measurement results.

**TABLE 4**

| Case | Measurement quantity maintained by the terminal device | Calculation basis for the terminal device |
|---|---|---|
| 1 | First path loss | Strong reference signal |
| 2 | Second path loss | Weak reference signal |
| 3 | First signal measurement result | Strong reference signal |
| 4 | Second signal measurement result | Weak reference signal |

Referring to Table 4, if the terminal device maintains the first path loss, the terminal device may perform path loss calculation based on the strong reference signal. For example, the terminal device may perform smooth calculation based on the signal measurement result in the active period of the first relay device to obtain the first path loss. If the terminal device maintains the second path loss, the terminal device may perform path loss calculation based on the weak reference signal. For example, the terminal device may perform smooth calculation based on the signal measurement result in the inactive period of the first relay device to obtain the second path loss. If the terminal device maintains the first signal measurement result, the terminal device may calculate the signal measurement result based on the strong reference signal. For example, the terminal device may perform smooth calculation based on the signal measurement result in the active period of the first relay device to obtain the first signal measurement result. If the terminal device maintains the second signal measurement result, the terminal device may calculate the signal measurement result based on the weak reference signal. For example, the terminal device may perform smooth calculation based on the signal measurement result in the inactive period of the first relay device to obtain the second signal measurement result.

As described above, the terminal device may send the PHR to the network device as a basis for the network device to allocate the uplink resource. After the terminal device enters the connected state and is configured with the PHR, the terminal device may send a PHR to the network device once, where the PHR may be used as a reference value. Subsequently, if the changing value of the path loss calculated by the terminal device exceeds the preset threshold, the terminal device is triggered to send the PHR.

After the relay device is introduced, if the terminal device maintains only one set of path loss, the terminal device may determine, based on the maintained path loss, whether to trigger the PHR. If the terminal device maintains multiple sets of path loss, how the terminal device determines whether to trigger the PHR is not explicitly specified.

In some embodiments, the network device may send the second indication information to the terminal device, so that the terminal device may clarify whether to trigger the PHR. The second indication information may be used to indicate one or more of: a path loss for triggering the PHR; a first preset threshold corresponding to the path loss for triggering the PHR; a period for triggering the PHR; whether to trigger the PHR when the changing value of the path loss exceeds a second preset threshold.

The path loss for triggering the PHR may include a first path loss and/or a second path loss. The first path loss is determined based on a reference signal forwarded by the first relay device, and the second path loss is determined based on a reference signal that is not forwarded by the first relay device.

In some embodiments, the second indication information may be used to indicate a path loss for triggering the PHR. For example, the network device may indicate, to the terminal device, which set of path loss may be used to trigger the PHR. For example, the network device may indicate to the terminal device that the first path loss may be used to trigger the PHR. For another example, the network device may indicate to the terminal device that the second path loss may be used to trigger the PHR. For another example, the network device may indicate to the terminal device that both the first path loss and the second path loss may be used to trigger the PHR.

If the network device indicates that a certain set of path loss is not used to trigger the PHR, the path loss may be only used to calculate uplink transmit power, but is not used to trigger the PHR.

In some embodiments, the second indication information may be used to indicate the first preset threshold corresponding to the path loss for triggering the PHR. That is, the second indication information may be used to indicate to trigger the PHR when the changing value of the path loss is greater than or equal to the first preset threshold. If the path loss for triggering the PHR is the first path loss, the first preset threshold is a threshold corresponding to the first path loss; and if the path loss for triggering the PHR is the second path loss, the first preset threshold is a threshold corresponding to the second path loss.

The first preset threshold corresponding to the first path loss may be the same as or different from the first preset threshold corresponding to the second path loss, which is not specifically limited in the embodiments of the present disclosure. The first preset threshold corresponding to the first path loss and the first preset threshold corresponding to the second path loss may be configured independently or jointly.

In some embodiments, the second indication information may be used to indicate a period for triggering the PHR. It is learned from the foregoing description that the PHR may be triggered periodically. If the PHR is triggered periodically, the network device may indicate a period for triggering the PHR to the terminal device. If the path loss for triggering the PHR is the first path loss, the period for triggering the PHR is a period for triggering the PHR corresponding to the first path loss; and if the path loss for triggering the PHR is the second path loss, the period for triggering the PHR is a period for triggering the PHR corresponding to the second path loss.

The period for triggering the PHR corresponding to the first path loss may be the same as or different from the period for triggering the PHR corresponding to the second path loss, which is not specifically limited in the embodiments of the present disclosure. The period for triggering the PHR corresponding to the first path loss and the period for triggering the PHR corresponding to the second path loss may be configured independently or jointly.

If the period for triggering the PHR corresponding to the first path loss is the same as the period for triggering the PHR corresponding to the second path loss, the two sets of path loss may share one PHR timer, or two sets of path loss may use respective PHR timers, and values of the two timers are the same.

In some embodiments, the second indication information may be used to indicate whether to trigger the PHR when the changing value of the path loss exceeds the second preset threshold. The changing value of the path loss being greater than or equal to the second preset threshold may indicate that the terminal device enters the coverage area of the first relay device from outside the coverage area of the first relay device. In other words, the change of the above path loss is caused by the fact that the terminal device enters the coverage area of the first relay device from outside the coverage area of the first relay device.

In some embodiments, it is assumed that the terminal device may perceive whether the terminal device is within the coverage area of the first relay device. If the terminal device enters the coverage area of the first relay device from outside the coverage area of the first relay device, there is no change in path loss since the terminal device has just entered the coverage area of the first relay device. The network device may indicate whether to trigger the PHR in this case. If the network device indicates that the terminal device should trigger the PHR, the terminal device may send the PHR to the network device when entering the coverage area of the first relay device. If the network device indicates that the terminal device does not trigger the PHR, the terminal device may not send the PHR to the network device when entering the coverage area of the first relay device.

In some embodiments, the network device may indicate whether to trigger the PHR when the terminal device enters the coverage area of the first relay device and the changing value of the path loss is greater than or equal to the second preset threshold. The changing value of the path loss may be determined based on a path loss value before the terminal device enters the coverage area of the first relay device.

In some embodiments, the terminal device may not perceive whether it enters the coverage area of the first relay device, and therefore, the terminal device may determine, whether it enters the coverage area of the first relay device through the changing value of the path loss. In this case, the network device may indicate whether the terminal device triggers the PHR when the changing value of the path loss is greater than or equal to the second preset threshold. In this case, the terminal device only needs to calculate the path loss value and does not need to determine whether the terminal device is within the coverage area of the first relay device. If the network device indicates that the terminal device should trigger the PHR, the terminal device may trigger the PHR when the changing value of the path loss is greater than or equal to the second preset threshold. If the network device indicates that the terminal device does not trigger the PHR, the terminal device may not trigger the PHR when the changing value of the path loss is greater than or equal to the second preset threshold.

It is learned from the foregoing that the terminal device may determine whether to trigger the PHR based on the first path loss and the second path loss, respectively. After the terminal device triggers the PHR, there is currently no explicit definition on which PHR the terminal device should send to the network device if it obtains uplink resources. Based on this, the embodiments of the present disclosure propose that the terminal device may send a first PHR to the network device. The first PHR may include one or more of: a triggered PHR, a first-type PHR, and a second-type PHR. The first-type PHR is a PHR triggered based on the first path loss, and the second-type PHR is a PHR triggered based on the second path loss.

The first PHR may be indicated by the network device to the terminal device. In other words, which PHR is specifically sent by the terminal device may be indicated by the network device or determined by the terminal device itself.

As an example, the terminal device may send all triggered PHRs to the network device. If the PHR triggered by the terminal device is the first-type PHR, the terminal device sends the first-type PHR to the network device. If the PHR triggered by the terminal device is the second-type PHR, the terminal device sends the second-type PHR to the network device. If the PHRs triggered by the terminal device include the first-type PHR and the second-type PHR, the terminal device may send the first-type PHR and the second-type PHR to the network device.

As another example, the terminal device may send only one type of PHR to the network device. For example, the terminal device may send the first-type PHR to the network device, but does not send the second-type PHR. If the PHR triggered by the terminal device is the first-type PHR, the terminal device sends the first-type PHR to the network device. If the PHR triggered by the terminal device is the second-type PHR, the terminal device does not send the second-type PHR to the network device. If the PHRs triggered by the terminal device include the first-type PHR and the second-type PHR, the terminal device only sends the first-type PHR to the network device, but does not send the second-type PHR.

For another example, the terminal device may send the second-type PHR to the network device, without sending the first-type PHR. If the PHR triggered by the terminal device is the first-type PHR, the terminal device does not send the first-type PHR to the network device. If the PHR triggered by the terminal device is the second-type PHR, the terminal device may send the second-type PHR to the network device. If the PHRs triggered by the terminal device include the first-type PHR and the second-type PHR, the terminal device may only send the second-type PHR to the network device, but does not send the first-type PHR.

In some embodiments, the terminal device may send the PHR through the MAC CE. If the terminal device needs to send the first-type PHR and the second-type PHR, the terminal device may send the first-type PHR and the second-type PHR through two MAC CEs, respectively. Certainly, the terminal device may alternatively send the first-type PHR and the second-type PHR through one MAC CE.

After the terminal device sends the triggered PHR, how to cancel the triggered state of the PHR has not yet been explicitly specified. In some embodiments, the terminal device may cancel the triggered state of the PHR that has been sent. If the terminal device sends the first-type PHR, the terminal device may cancel the triggered state of the first-type PHR. If the terminal device sends the second-type PHR, the terminal device may cancel the triggered state of the second-type PHR. If the terminal device sends the first-type PHR and the second-type PHR, the terminal device may cancel the triggered states of the first-type PHR and the second-type PHR.

In some other embodiments, as may be known from the foregoing description, there may be a case that the terminal device triggers two types of PHR, but only one type of PHR is transmitted without transmitting another type of PHR. For this case, the terminal device may take two measures. The first measure is that the terminal device may cancel only the triggered state of the PHR that has been sent without cancelling the triggered state of the PHR that has not yet been sent. For example, if the terminal device triggers the first-type PHR and the second-type PHR, but the terminal device only sends the first-type PHR, the terminal device may cancel the triggered state of the first-type PHR without cancelling the triggered state of the second-type PHR. For another example, if the terminal device triggers the first-type PHR and the second-type PHR, but the terminal device only sends the second-type PHR, the terminal device may cancel the triggered state of the second-type PHR without cancelling the triggered state of the first-type PHR.

The second measure is that the terminal device may cancel the triggered states of all the PHRs, that is, both the triggered state of the PHR that has been sent and the triggered state of the PHR that has not yet been sent are cancelled. For example, if the terminal device triggers the first-type PHR and the second-type PHR, but the terminal device only sends the first-type PHR, the terminal device may cancel the triggered states of the first-type PHR and the second-type PHR. For another example, if the terminal device triggers the first-type PHR and the second-type PHR, but the terminal device only sends the second-type PHR, the terminal device may cancel the triggered states of the second-type PHR and the first-type PHR.

In some embodiments, the network device may configure PHR-related parameters for the terminal device, so that the terminal device determines whether to trigger the PHR based on the PHR-related parameters. The PHR-related parameters may include one or more of: Phr-ProhibitTimer, phr-Tx-PowerFactorChange, phr-Type2OtherCell, phr-ModeOtherCG, multiplePHR, mpe-Reporting-FR2, mpe-ProhibitTimer, (mpe-Threshold), numberOfN, mpe-ResourcePool.

The PHR-related parameters for the first path loss and the PHR-related parameters for the second path loss may be configured independently or jointly. The PHR-related parameters for the first path loss may be the same as or different from the PHR-related parameters for the second path loss. For example, the network device may jointly configure a set of PHR-related parameters for the first path loss and the second path loss, or the network device may respectively configure a set of PHR-related parameters for the first path loss and the second path loss. For different PHR-related parameters, a set of parameters may be configured, or two sets of parameters may be configured, and specific numbers of sets of parameters configured for different PHR-related parameters are independent of each other. For example, different PHR prohibit timers may be configured for the first path loss and the second path loss, while the same phr-Tx-PowerFactorChange may be configured for both the first path loss and the second path loss.

With reference to the foregoing description, the terminal device may maintain two sets of signal measurement results, i.e., a signal measurement result determined based on a strong reference signal and a signal measurement result determined based on a weak reference signal. In this case, which signal measurement result should be used as the signal measurement result of the serving cell by the terminal device is not explicitly specified at present. Based on this, the embodiments of the present disclosure propose that the signal measurement result of the serving cell may be determined based on a third reference signal, that is, a signal measurement result determined based on the third reference signal is used as the signal measurement result of the serving cell.

In some embodiments, the third reference signal may include one or more of: a reference signal in the first time interval, a reference signal in the measurement occasion in the first time interval, a reference signal outside the first time interval, and a reference signal outside the measurement occasion in the first time interval. For example, the third reference signal may include the reference signal in the first time interval or the reference signal in the measurement occasion in the first time interval. For another example, the third reference signal may include the reference signal outside the first time interval or the reference signal outside the measurement occasion in the first time interval. For another example, the third reference signal may include the reference signal in the first time interval and the reference signal outside the first time interval. For another example, the third reference signal may include the reference signal in the measurement occasion in the first time interval and the reference signal outside the measurement occasion in the first time interval.

If the first time interval is the active period of the first relay device, the reference signal in the first time interval or the reference signal in the measurement occasion in the first time interval may be referred to as a strong reference signal, and the reference signal outside the first time interval or the reference signal outside the measurement occasion in the first time interval may be referred to as a weak reference signal. If the first time interval is the inactive period of the first relay device, the reference signal in the first time interval or the reference signal in the measurement occasion in the first time interval may be referred to as a weak reference signal, and the reference signal outside the first time interval or the reference signal outside the measurement occasion in the first time interval may be referred to as a strong reference signal.

In some embodiments, the third reference signal may include a reference signal forwarded by the first relay device, and/or a reference signal that is not forwarded by the first relay device. The reference signal forwarded by the first relay device may also be referred to as the strong reference signal, and the reference signal that is not forwarded by the first relay device may also be referred to as the weak reference signal. The reference signal that is not forwarded by the first relay device may refer to a reference signal that is directly sent by the network device to the terminal device.

It is learned from the foregoing that the third reference signal may be the strong reference signal or the weak reference signal. That is, the signal measurement result of the serving cell may be determined based on the strong reference signal, or the signal measurement result of the serving cell may be determined based on the weak reference signal. The third reference signal may be indicated by the network device or predefined in a protocol. For example, the network device may send fifth indication information to the terminal device, where the fifth indication information is used to indicate the third reference signal.

In some embodiments, the third reference signal may be related to a measurement event. Third reference signals corresponding to different measurement events may be independently configured, or the third reference signals corresponding to different measurement events may be jointly configured. In some implementations, the third reference signals corresponding to different measurement events may be the same, or the third reference signals corresponding to different measurement events may also be different. This is not specifically limited in the embodiments of the present disclosure.

The measurement event may include one or more of: Event A1, Event A2, Event A3, Event A4, Event A5, Event A6, Event B1, Event B2.

In some embodiments, the network device may configure one or more of the following contents of the terminal device.

When determining the measurement event A1, whether to use the strong reference signal or the weak reference signal as a basis for calculating a signal measurement result of the serving cell.

When determining the measurement event A2, whether to use the strong reference signal or the weak reference signal as a basis for calculating the signal measurement result of the serving cell.

When determining the measurement event A3, whether to use the strong reference signal or the weak reference signal as a basis for calculating the signal measurement result of the serving cell.

When determining the measurement event A4, whether to use the strong reference signal or the weak reference signal as a basis for calculating the signal measurement result of the serving cell.

When determining the measurement event A5, whether to use the strong reference signal or the weak reference signal as a basis for calculating the signal measurement result of the serving cell.

When determining the measurement event A6, whether to use the strong reference signal or the weak reference signal as a basis for calculating the signal measurement result of the serving cell.

When determining the measurement event B1, whether to use the strong reference signal or the weak reference signal as a basis for calculating the signal measurement result of the serving cell.

When determining the measurement event B2, whether to use the strong reference signal or the weak reference signal is used as a basis for calculating the signal measurement result of the serving cell.

The configuration of the reference signal corresponding to the measurement event may be independently configured or jointly configured. For example, the network device may configure a plurality of measurement events to use the same reference signal, or the network device may configure a plurality of measurement events to use different reference signals.

It should be noted that the foregoing is an example of classifying the reference signal into the strong reference signal and the weak reference signal, and the embodiments of the present disclosure are not limited thereto. In the embodiments of the present disclosure, the reference signal may be classified into more types, e.g., N types of reference signals, where N is an integer greater than or equal to 3. In some embodiments, different reference signals may have different signal strengths (or signal strength ranges). In some embodiments, the N types of reference signals may be reference signals in N time intervals, or the N type of reference signals may be reference signals in the N types of measurement occasions.

In some embodiments, if the reference signal includes N types of reference signals, the terminal device may maintain N sets of path loss and determine whether to trigger the PHR based on the N sets of path loss. Alternatively, if the reference signal includes the N types of reference signals, the terminal device may maintain N sets of signal measurement results and determine whether to report the signal measurement result based on the N sets of signal measurement results.

In some embodiments, after completing the signal measurement, the terminal device may send CSI to the network device. The CSI may be a measurement result obtained by the terminal device from a single signal measurement.

The network device may implement channel-dependent scheduling and link adaptation based on the CSI fed back by the terminal device. For example, the network device may determine, based on the CSI, a modulation and coding scheme (MCS) and/or a resource block (RB) resource allocation for downlink data.

In some embodiments, the network device usually sends the downlink data to the terminal device only in the active period of the first relay device, and based on this, the embodiments of the present disclosure propose that the CSI may be determined based on the strong reference signal, that is, the terminal device may measure the reference signal in the active period of the first relay device and send the CSI to the network device based on the signal measurement result. In other words, the terminal device may perform the CSI reporting without measuring the reference signal in the inactive period of the first relay device.

The following describes a CSI reporting process with reference to FIG. 9.

In the solution shown in FIG. 9, the terminal device has two CSI reporting opportunities in the active period of the first relay device. When the first CSI reporting opportunity arrives, the terminal device cannot measure the reference signal in the active period of the first relay device, and in this case, the terminal device may choose not to report, or report indication information out of range to the network device. When the second CSI reporting opportunity arrives, the terminal device may measure the reference signal in the active period of the first relay device, and therefore, the terminal device may report a signal measurement result measured at a measurement occasion 2.

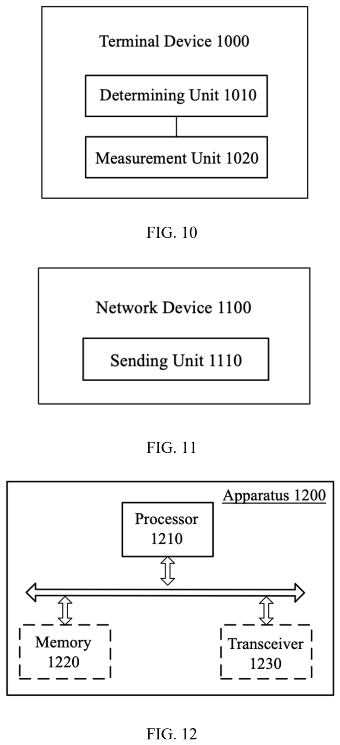

The method embodiments of the present disclosure are described in detail above with reference to FIG. 1 to FIG. 9, and the apparatus embodiments of the present disclosure are described in detail below with reference to FIG. 10 to FIG. 12. It should be understood that descriptions of the method embodiments correspond to descriptions of the apparatus embodiments, and therefore, reference may be made to the foregoing method embodiments for parts that are not described in detail.

FIG. 10 is a schematic block diagram of a terminal device according to an embodiment of the present disclosure. The terminal device 1000 shown in FIG. 10 may be any terminal device described above, and the terminal device 1000 may include a determining unit 1010 and a measurement unit 1020.

The determining unit 1010 is configured to determine a first time interval or a measurement occasion in the first time interval.

The measurement unit 1020 is configured to measure a reference signal in the first time interval or the measurement occasion in the first time interval.

In some embodiments, the first time interval or the measurement occasion in the first time interval is determined based on first indication information.

In some embodiments, the first indication information is provided by a network device.

In some embodiments, the first indication information indicates the first time interval or the measurement occasion in the first time interval by indicating a state of a first relay device.

In some embodiments, whether the terminal device is in a coverage area of the first relay device is determined based on first information, and the first information is related to one or more of: a location of the terminal device, a location of the first relay device, and a signal measurement result of the terminal device for the reference signal.

In some embodiments, the terminal device being in the coverage area of the first relay device includes one or both of: a distance between the terminal device and the first relay device being less than or equal to a first preset threshold value, and a changing value of the signal measurement result being greater than or equal to a second preset threshold value.

In some embodiments, the terminal device is in an idle state or an inactive state, and the terminal device further includes: a processing unit, configured to perform cell selection and/or cell reselection based on a first reference signal, where the first reference signal includes one or more of: a reference signal in the first time interval, a reference signal in the measurement occasion in the first time interval, a reference signal outside the first time interval, and a reference signal outside the measurement occasion in the first time interval.

In some embodiments, the first reference signal is indicated by a network device or predefined by a protocol.

In some embodiments, the terminal device is in a connected state, and the terminal device further includes: a processing unit, configured to perform path loss calculation and/or measurement reporting based on a second reference signal, where the second reference signal includes one or more of: a reference signal in the first time interval, a reference signal in the measurement occasion in the first time interval, a reference signal outside the first time interval, and a reference signal outside the measurement occasion in the first time interval.

In some embodiments, the second reference signal is indicated by a network device.

In some embodiments, a receiving unit is configured to receive second indication information sent by the network device, where the second indication information is used to indicate one or more of: a path loss for triggering a PHR; a first preset threshold corresponding to the path loss for triggering the PHR; a period for triggering the PHR; and whether to trigger the PHR when a changing value of the path loss is greater than or equal to a second preset threshold. The path loss for triggering the PHR includes a first path loss and/or a second path loss, the first path loss is determined based on a reference signal in the first time interval or a reference signal in the measurement occasion in the first time interval, and the second path loss is determined based on a reference signal outside the first time interval or a reference signal outside the measurement occasion in the first time interval.

In some embodiments, the terminal device further includes: a sending unit, configured to send a first PHR to the network device, where the first PHR includes one or more of: a triggered PHR, a first-type PHR, and a second-type PHR. The first-type PHR is a PHR triggered based on the first path loss, and the second-type PHR is a PHR triggered based on the second path loss.

In some embodiments, PHR-related parameters for the first path loss and PHR-related parameters for the second path loss are independently configured, or the PHR-related parameters for the first path loss and the PHR-related parameters for the second path loss are jointly configured.

In some embodiments, the terminal device is in a connected state, and the terminal device further includes: a processing unit, configured to determine a signal measurement result of a serving cell based on a third reference signal, where the third reference signal includes one or more of: a reference signal in the first time interval, a reference signal in the measurement occasion in the first time interval, a reference signal outside the first time interval, and a reference signal outside the measurement occasion in the first time interval.

In some embodiments, the third reference signal is indicated by a network device or predefined by a protocol.

In some embodiments, the third reference signal is related to a measurement event.

In some embodiments, third reference signals corresponding to different measurement events are independently configured, or the third reference signals corresponding to the different measurement events are jointly configured.

In some embodiments, the state of the first relay device includes an active state and/or an inactive state.

FIG. 11 is a schematic block diagram of a network device according to an embodiment of the present disclosure. The network device 1100 shown in FIG. 11 may be any network device described above, and the network device 1100 includes a sending unit 1110.

The sending unit 1110 is configured to send first indication information to a terminal device, where the first indication information is used to indicate a first time interval or a measurement occasion in the first time interval, and the first time interval or the measurement occasion in the first time interval is used to measure a reference signal.

In some embodiments, the first indication information indicates the first time interval or the measurement occasion in the first time interval by indicating a state of a first relay device.

In some embodiments, whether the terminal device is in a coverage area of the first relay device is determined based on first information, and the first information is related to one or more of: a location of the terminal device, a location of the first relay device, and a signal measurement result of the terminal device for the reference signal.

In some embodiments, the terminal device being in the coverage area of the first relay device includes one or both of: a distance between the terminal device and the first relay device being less than or equal to a first preset threshold value, and a changing value of the signal measurement result being greater than or equal to a second preset threshold value.

In some embodiments, the terminal device is in an idle state or an inactive state, and the sending unit is further configured to send third indication information to the terminal device, where the third indication information is used to indicate a first reference signal, the first reference signal is used for cell selection and/or cell reselection, and the first reference signal includes one or more of: a reference signal in the first time interval, a reference signal in the measurement occasion in the first time interval, a reference signal outside the first time interval, and a reference signal outside the measurement occasion in the first time interval.

In some embodiments, the terminal device is in a connected state, and the sending unit is further configured to send fourth indication information to the terminal device, where the fourth indication information is used to indicate a second reference signal, the second reference signal is used to perform path loss calculation and/or measurement reporting, and the second reference signal includes one or more of: a reference signal in the first time interval, a reference signal in the measurement occasion in the first time interval, a reference signal outside the first time interval, and a reference signal outside the measurement occasion in the first time interval.

In some embodiments, the sending unit is further configured to send second indication information to the terminal device, where the second indication information is used to indicate one or more of: a path loss for triggering a PHR; a first preset threshold corresponding to the path loss for triggering the PHR; a period for triggering the PHR; and whether to trigger the PHR when a changing value of the path loss is greater than or equal to a second preset threshold. The path loss for triggering the PHR includes a first path loss and/or a second path loss, the first path loss is determined based on a reference signal in the first time interval or a reference signal in the measurement occasion in the first time interval, and the second path loss is determined based on a reference signal outside the first time interval or a reference signal outside the measurement occasion in the first time interval.

In some embodiments, the network device further includes: a receiving unit, configured to receive a first PHR sent by the terminal device, where the first PHR includes one or more of: a triggered PHR, a first-type PHR, and a second-type PHR. The first-type PHR is a PHR triggered based on the first path loss, and the second-type PHR is a PHR triggered based on the second path loss.

In some embodiments, PHR-related parameters for the first path loss and PHR-related parameters for the second path loss are independently configured, or the PHR-related parameters for the first path loss and the PHR-related parameters for the second path loss are jointly configured.

In some embodiments, the terminal device is in a connected state, and the sending unit is further configured to send fifth indication information to the terminal device, where the fifth indication information is used to indicate a third reference signal, the third reference signal is used to determine a signal measurement result of a serving cell, and the third reference signal includes one or more of: a reference signal in the first time interval, a reference signal in the measurement occasion in the first time interval, a reference signal outside the first time interval, and a reference signal outside the measurement occasion in the first time interval.

In some embodiments, the third reference signal is related to a measurement event.

In some embodiments, third reference signals corresponding to different measurement events are independently configured, or the third reference signals corresponding to the different measurement events are jointly configured.

In some embodiments, the state of the first relay device includes an active state and/or an inactive state.

FIG. 12 is a schematic structural diagram of an apparatus for communication according to an embodiment of the present disclosure. The dashed line in FIG. 12 indicates that the unit or module is optional. The apparatus 1200 may be configured to implement the method described in the foregoing method embodiments. The apparatus 1200 may be a chip, a terminal device, or a network device.

The apparatus 1200 may include one or more processors 1210, and the processor 1210 may support the apparatus 1200 to implement the method described in the foregoing method embodiments. The processor 1210 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1200 may further include one or more memories 1220 storing a program, and the program may be executed by the processor 1210 to cause the processor 1210 to perform the method described in the foregoing method embodiments. The memory 1220 may be independent of the processor 1210 or may be integrated into the processor 1210.

The apparatus 1200 may further include a transceiver 1230, and the processor 1210 may communicate with another device or chip via the transceiver 1230. For example, the processor 1210 may perform data transceiving with another device or chip via the transceiver 1230.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that, in the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

It should be understood that the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for signal measurement, comprising:
determining, by a terminal device, one of a first time interval and a measurement occasion in the first time interval; and
measuring, by the terminal device, a reference signal in the one of the first time interval and the measurement occasion in the first time interval.

2. The method according to claim 1, wherein the one of the first time interval and the measurement occasion in the first time interval is determined based on first indication information.

3. The method according to claim 2, wherein the first indication information is provided by a network device.

4. The method according to claim 2 or claim 3, wherein the first indication information indicates the one of the first time interval and the measurement occasion in the first time interval by indicating a state of a first relay device.

5. The method according to claim 4, wherein whether the terminal device is in a coverage area of the first relay device is determined based on first information, and wherein the first information is related to one or more of: a location of the terminal device, a location of the first relay device, and a signal measurement result of the terminal device for the reference signal.

6. The method according to claim 5, wherein the terminal device being in the coverage area of the first relay device includes one or both of:
a distance between the terminal device and the first relay device being less than or equal to a first preset threshold value; and
a changing value of the signal measurement result being greater than or equal to a second preset threshold value.

7. The method according to any one of claims 1 to 6, wherein the terminal device is in one of an idle state and an inactive state, and the method further includes:
performing, by the terminal device, one or both of cell selection and cell reselection based on a first reference signal, wherein the first reference signal includes one or more of: a reference signal in the first time interval, a reference signal in the measurement occasion in the first time interval, a reference signal outside the first time interval, and a reference signal outside the measurement occasion in the first time interval.

8. The method according to claim 7, wherein the first reference signal is indicated by a network device or predefined by a protocol.

9. The method according to any one of claims 1 to 6, wherein the terminal device is in a connected state, and the method further includes:
performing, by the terminal device, one or both of path loss calculation and measurement reporting based on a second reference signal, wherein the second reference signal includes one or more of: a reference signal in the first time interval, a reference signal in the measurement occasion in the first time interval, a reference signal outside the first time interval, and a reference signal outside the measurement occasion in the first time interval.

10. The method according to claim 9, wherein the second reference signal is indicated by a network device.

11. The method according to any one of claims 1 to 10, further comprising:
receiving, by the terminal device, second indication information sent by a network device, wherein the second indication information is used to indicate one or more of:
a path loss for triggering a power headroom report, PHR;
a first preset threshold corresponding to the path loss for triggering the PHR;
a period for triggering the PHR; and
whether to trigger the PHR when a changing value of the path loss is greater than or equal to a second preset threshold;
wherein the path loss for triggering the PHR includes one or both of a first path loss and a second path loss, the first path loss is determined based on one of a reference signal in the first time interval and a reference signal in the measurement occasion in the first time interval, and the second path loss is determined based on one of a reference signal outside the first time interval and a reference signal outside the measurement occasion in the first time interval.

12. The method according to claim 11, further comprising:
sending, by the terminal device, a first PHR to the network device, wherein the first PHR includes one or more of: a triggered PHR, a first-type PHR, and a second-type PHR;
wherein the first-type PHR is a PHR triggered based on the first path loss, and the second-type PHR is a PHR triggered based on the second path loss.

13. The method according to claim 11 or claim 12, wherein PHR-related parameters for the first path loss and PHR-related parameters for the second path loss are independently configured, or the PHR-related parameters for the first path loss and the PHR-related parameters for the second path loss are jointly configured.

14. The method according to any one of claims 1 to 13, wherein the terminal device is in a connected state, and the method further includes:
determining, by the terminal device, a signal measurement result of a serving cell based on a third reference signal, wherein the third reference signal includes one or more of: a reference signal in the first time interval, a reference signal in the measurement occasion in the first time interval, a reference signal outside the first time interval, and a reference signal outside the measurement occasion in the first time interval.

15. The method according to claim 14, wherein the third reference signal is indicated by a network device or predefined by a protocol.

16. The method according to claim 14 or claim 15, wherein the third reference signal is related to a measurement event.

17. The method according to claim 16, wherein third reference signals corresponding to different measurement events are independently configured, or the third reference signals corresponding to the different measurement events are jointly configured.

18. The method according to any one of claims 4 to 17, wherein the state of the first relay device includes one or both of an active state and an inactive state.

19. A method for signal measurement, comprising:
sending, by a network device, first indication information to a terminal device, wherein the first indication information is used to indicate one of a first time interval and a measurement occasion in the first time interval, and the one of the first time interval and the measurement occasion in the first time interval is used to measure a reference signal.

20. The method according to claim 19, wherein the first indication information indicates the one of the first time interval and the measurement occasion in the first time interval by indicating a state of a first relay device.

21. The method according to claim 20, wherein whether the terminal device is in a coverage area of the first relay device is determined based on first information, and wherein the first information is related to one or more of: a location of the terminal device, a location of the first relay device, and a signal measurement result of the terminal device for the reference signal.

22. The method according to claim 21, wherein the terminal device being in the coverage area of the first relay device includes one or both of:
a distance between the terminal device and the first relay device being less than or equal to a first preset threshold value; and
a changing value of the signal measurement result being greater than or equal to a second preset threshold value.

23. The method according to any one of claims 19 to 22, wherein the terminal device is in one of an idle state and an inactive state, and the method further includes:
sending, by the network device, third indication information to the terminal device, wherein the third indication information is used to indicate a first reference signal, the first reference signal is used for one or both of cell selection and cell reselection, and the first reference signal includes one or more of: a reference signal in the first time interval, a reference signal in the measurement occasion in the first time interval, a reference signal outside the first time interval, and a reference signal outside the measurement occasion in the first time interval.

24. The method according to any one of claims 19 to 22, wherein the terminal device is in a connected state, and the method further includes:
sending, by the network device, fourth indication information to the terminal device, wherein the fourth indication information is used to indicate a second reference signal, the second reference signal is used to perform one or both of path loss calculation and measurement reporting, and the second reference signal includes one or more of: a reference signal in the first time interval, a reference signal in the measurement occasion in the first time interval, a reference signal outside the first time interval, and a reference signal outside the measurement occasion in the first time interval.

25. The method according to any one of claims 19 to 24, further comprising:
sending, by the network device, second indication information to the terminal device, wherein the second indication information is used to indicate one or more of:
a path loss for triggering a power headroom report, PHR;
a first preset threshold corresponding to the path loss for triggering the PHR;
a period for triggering the PHR; and
whether to trigger the PHR when a changing value of the path loss is greater than or equal to a second preset threshold;
wherein the path loss for triggering the PHR includes one or both of a first path loss and a second path loss, the first path loss is determined based on one of a reference signal in the first time interval and a reference signal in the measurement occasion in the first time interval, and the second path loss is determined based on one of a reference signal outside the first time interval and a reference signal outside the measurement occasion in the first time interval.

26. The method according to claim 25, further comprising:
receiving, by the network device, a first PHR sent by the terminal device, wherein the first PHR includes one or more of: a triggered PHR, a first-type PHR, and a second-type PHR;
wherein the first-type PHR is a PHR triggered based on the first path loss, and the second-type PHR is a PHR triggered based on the second path loss.

27. The method according to claim 25 or claim 26, wherein PHR-related parameters for the first path loss and PHR-related parameters for the second path loss are independently configured, or the PHR-related parameters for the first path loss and the PHR-related parameters for the second path loss are jointly configured.

28. The method according to any one of claims 19 to 27, wherein the terminal device is in a connected state, and the method further includes:
sending, by the network device, fifth indication information to the terminal device, wherein the fifth indication information is used to indicate a third reference signal, the third reference signal is used to determine a signal measurement result of a serving cell, and the third reference signal includes one or more of: a reference signal in the first time interval, a reference signal in the measurement occasion in the first time interval, a reference signal outside the first time interval, and a reference signal outside the measurement occasion in the first time interval.

29. The method according to claim 27 or claim 28, wherein the third reference signal is related to a measurement event.

30. The method according to claim 29, wherein third reference signals corresponding to different measurement events are independently configured, or the third reference signals corresponding to the different measurement events are jointly configured.

31. The method according to any one of claims 20 to 30, wherein the state of the first relay device includes one or both of an active state and an inactive state.

32. A terminal device, comprising:
a determining unit, configured to determine one of a first time interval and a measurement occasion in the first time interval; and
a measurement unit, configured to measure a reference signal in the one of the first time interval and the measurement occasion in the first time interval.

33. The terminal device according to claim 32, wherein the one of the first time interval and the measurement occasion in the first time interval is determined based on first indication information.

34. The terminal device according to claim 33, wherein the first indication information is provided by a network device.

35. The terminal device according to claim 33 or claim 34, wherein the first indication information indicates the one of the first time interval and the measurement occasion in the first time interval by indicating a state of a first relay device.

36. The terminal device according to claim 35, wherein whether the terminal device is in a coverage area of the first relay device is determined based on first information, and wherein the first information is related to one or more of: a location of the terminal device, a location of the first relay device, and a signal measurement result of the terminal device for the reference signal.

37. The terminal device according to claim 36, wherein the terminal device being in the coverage area of the first relay device includes one or both of:
a distance between the terminal device and the first relay device being less than or equal to a first preset threshold value; and
a changing value of the signal measurement result being greater than or equal to a second preset threshold value.

38. The terminal device according to any one of claims 32 to 37, wherein the terminal device is in one of an idle state and an inactive state, and the terminal device further includes:
a processing unit, configured to perform one or both of cell selection and cell reselection based on a first reference signal, wherein the first reference signal includes one or more of: a reference signal in the first time interval, a reference signal in the measurement occasion in the first time interval, a reference signal outside the first time interval, and a reference signal outside the measurement occasion in the first time interval.

39. The terminal device according to claim 38, wherein the first reference signal is indicated by a network device or predefined by a protocol.

40. The terminal device according to any one of claims 32 to 37, wherein the terminal device is in a connected state, and the terminal device further includes:
a processing unit, configured to perform one or both of path loss calculation and measurement reporting based on a second reference signal, wherein the second reference signal includes one or more of: a reference signal in the first time interval, a reference signal in the measurement occasion in the first time interval, a reference signal outside the first time interval, and a reference signal outside the measurement occasion in the first time interval.

41. The terminal device according to claim 40, wherein the second reference signal is indicated by a network device.

42. The terminal device according to any one of claims 32 to 41, further comprising:
a receiving unit, configured to receive second indication information sent by a network device, wherein the second indication information is used to indicate one or more of:
a path loss for triggering a power headroom report, PHR;
a first preset threshold corresponding to the path loss for triggering the PHR;
a period for triggering the PHR; and
whether to trigger the PHR when a changing value of the path loss is greater than or equal to a second preset threshold;
wherein the path loss for triggering the PHR includes one or both of a first path loss and a second path loss, the first path loss is determined based on one of a reference signal in the first time interval and a reference signal in the measurement occasion in the first time interval, and the second path loss is determined based on one of a reference signal outside the first time interval and a reference signal outside the measurement occasion in the first time interval.

43. The terminal device according to claim 42, further comprising:
a sending unit, configured to send a first PHR to the network device, wherein the first PHR includes one or more of: a triggered PHR, a first-type PHR, and a second-type PHR;
wherein the first-type PHR is a PHR triggered based on the first path loss, and the second-type PHR is a PHR triggered based on the second path loss.

44. The terminal device according to claim 42 or claim 43, wherein PHR-related parameters for the first path loss and PHR-related parameters for the second path loss are independently configured, or the PHR-related parameters for the first path loss and the PHR-related parameters for the second path loss are jointly configured.

45. The terminal device according to any one of claims 32 to 44, wherein the terminal device is in a connected state, and the terminal device further includes:
a processing unit, configured to determine a signal measurement result of a serving cell based on a third reference signal, wherein the third reference signal includes one or more of: a reference signal in the first time interval, a reference signal in the measurement occasion in the first time interval, a reference signal outside the first time interval, and a reference signal outside the measurement occasion in the first time interval.

46. The terminal device according to claim 45, wherein the third reference signal is indicated by a network device or predefined by a protocol.

47. The terminal device according to claim 45 or claim 46, wherein the third reference signal is related to a measurement event.

48. The terminal device according to claim 47, wherein third reference signals corresponding to different measurement events are independently configured, or the third reference signals corresponding to the different measurement events are jointly configured.

49. The terminal device according to any one of claims 35 to 48, wherein the state of the first relay device includes one or both of an active state and an inactive state.

50. A network device, comprising:
a sending unit, configured to send first indication information to a terminal device, wherein the first indication information is used for one of a first time interval and a measurement occasion in the first time interval, and the one of the first time interval and the measurement occasion in the first time interval is used to measure a reference signal.

51. The network device according to claim 50, wherein the first indication information indicates the one of the first time interval and the measurement occasion in the first time interval by indicating a state of a first relay device.

52. The network device according to claim 51, wherein whether the terminal device is in a coverage area of the first relay device is determined based on first information, and wherein the first information is related to one or more of: a location of the terminal device, a location of the first relay device, and a signal measurement result of the terminal device for the reference signal.

53. The network device according to claim 52, wherein the terminal device being in the coverage area of the first relay device includes one or both of:
a distance between the terminal device and the first relay device being less than or equal to a first preset threshold value; and
a changing value of the signal measurement result being greater than or equal to a second preset threshold value.

54. The network device according to any one of claims 50 to 53, wherein the terminal device is in one of an idle state and an inactive state, and the sending unit is further configured to:
send third indication information to the terminal device, wherein the third indication information is used to indicate a first reference signal, the first reference signal is used for one or both of cell selection and cell reselection, and the first reference signal includes one or more of: a reference signal in the first time interval, a reference signal in the measurement occasion in the first time interval, a reference signal outside the first time interval, and a reference signal outside the measurement occasion in the first time interval.

55. The network device according to any one of claims 50 to 53, wherein the terminal device is in a connected state, and the sending unit is further configured to:
send fourth indication information to the terminal device, wherein the fourth indication information is used to indicate a second reference signal, the second reference signal is used to perform one or both of path loss calculation and measurement reporting, and the second reference signal includes one or more of: a reference signal in the first time interval, a reference signal in the measurement occasion in the first time interval, a reference signal outside the first time interval, and a reference signal outside the measurement occasion in the first time interval.

56. The network device according to any one of claims 50 to 55, wherein the sending unit is further configured to:
sending second indication information to the terminal device, wherein the second indication information is used to indicate one or more of:
a path loss for triggering a power headroom report, PHR;
a first preset threshold corresponding to the path loss for triggering the PHR;
a period for triggering the PHR; and
whether to trigger the PHR when a changing value of the path loss is greater than or equal to a second preset threshold;
wherein the path loss for triggering the PHR includes one or both of a first path loss and a second path loss, the first path loss is determined based on one of a reference signal in the first time interval and a reference signal in the measurement occasion in the first time interval, and the second path loss is determined based on one of a reference signal outside the first time interval and a reference signal outside the measurement occasion in the first time interval.

57. The network device according to claim 56, further comprising:
a receiving unit, configured to receive a first PHR sent by the terminal device, wherein the first PHR includes one or more of: a triggered PHR, a first-type PHR, and a second-type PHR;
wherein the first-type PHR is a PHR triggered based on the first path loss, and the second-type PHR is a PHR triggered based on the second path loss.

58. The network device according to claim 56 or claim 57, wherein PHR-related parameters for the first path loss and PHR-related parameters for the second path loss are independently configured, or the PHR-related parameters for the first path loss and the PHR-related parameters for the second path loss are jointly configured.

59. The network device according to any one of claims 50 to 58, wherein the terminal device is in a connected state, and the sending unit is further configured to:
send fifth indication information to the terminal device, wherein the fifth indication information is used to indicate a third reference signal, the third reference signal is used to determine a signal measurement result of a serving cell, and the third reference signal includes one or more of: a reference signal in the first time interval, a reference signal in the measurement occasion in the first time interval, a reference signal outside the first time interval, and a reference signal outside the measurement occasion in the first time interval.

60. The network device according to claim 58 or claim 59, wherein the third reference signal is related to a measurement event.

61. The network device according to claim 60, wherein third reference signals corresponding to different measurement events are independently configured, or the third reference signals corresponding to the different measurement events are jointly configured.

62. The network device according to any one of claims 51 to 61, wherein the state of the first relay device includes one or both of an active state and an inactive state.

63. A terminal device, comprising a transceiver, a memory, and a processor, wherein the memory is configured to store a program, and the processor is configured to invoke the program in the memory and control the transceiver to receive or send a signal, to cause the terminal to perform the method according to any one of claims 1 to 18.

64. A network device, including a transceiver, a memory, and a processor, wherein the memory is configured to store a program, and the processor is configured to invoke the program in the memory and control the transceiver to receive or send a signal to cause the network device to perform the method according to any one of claims 19 to 31.

65. An apparatus, comprising a processor, configured to invoke a program from a memory to cause the apparatus to perform the method according to any one of claims 1 to 18.

66. An apparatus, comprising a processor, configured to invoke a program from a memory to cause the apparatus to perform the method according to any one of claims 19 to 31.

67. A chip, comprising a processor, configured to invoke a program from a memory to cause a device on which the chip is installed to perform the method according to any one of claims 1 to 18.

68. A chip, comprising a processor, configured to invoke a program from a memory to cause a device on which the chip is installed to perform the method according to any one of claims 19 to 31.

69. A computer-readable storage medium storing a program, wherein the program causes a computer to perform the method according to any one of claims 1 to 18.

70. A computer-readable storage medium storing a program, wherein the program causes a computer to perform the method according to any one of claims 19 to 31.

71. A computer program product, comprising a program that causes a computer to perform the method according to any one of claims 1 to 18.

72. A computer program product, comprising a program that causes a computer to perform the method according to any one of claims 19 to 31.

73. A computer program, wherein the computer program causes a computer to perform the method according to any one of claims 1 to 18.

74. A computer program, wherein the computer program causes a computer to perform the method according to any one of claims 19 to 31.
